# EUROPEAN PATENT APPLICATION

(11) **EP 2 270 994 A2**
(43) Date of publication of application: **05.01.2011**
(21) Application number: 09735243.9
(22) Date of filing: 25.02.2009
(51) Int. Cl.: H04B 1/40

(54) **WIRELESS TRANSMITTING AND RECEIVING APPARATUS FOR VEHICLE REAR AND SIDE VIEWS INDEPENDENT OF THE VEHICLE'S BODY AND METHOD THEREOF**

(30) Priority: 21.04.2008 KR 20080036899
(71) Applicant: Edgetek Co., Ltd., Gyeonggi-do 443-822 (KR)
(72) Inventor: JO, Si-Rae, Seoul 138-809 (KR)
(74) Representative: Witzany, Manfred
(86) International application number: PCT/KR2009/000883
(87) International publication number: WO 2009/131305

(57) **Abstract**

Provided are an independent wireless rear/side video transceiver for a vehicle and a method thereof. The independent wireless video transmitter for a vehicle according to an exemplary embodiment of the present invention, which includes: an accelerometer that senses start and reverse movement of a vehicle and outputs the sensed result to a controller unit; a camera module that outputs a video signal acquired by photographing the rear of the vehicle to the controller unit; a solar cell that converts light into electricity; a battery that is charged with the electricity generated from the solar cell; a power management unit that controls the solar cell and the battery; a wireless transmission unit that wirelessly transmits a video signal outputted from the controller unit; and the controller unit that determines and controls input/output signals of the accelerometer, the camera module, the power management unit, and the wireless transmission unit.

The present invention is independently installed from a vehicle, because it does not need to be physically connected with wires in the vehicle. Therefore, a driver can directly and easily mount the transceiver at a desired position, thereby reducing cost and preventing damage to the vehicle.

## Description

### CROSS-REFERENCE TO RELATED APPLICATION

This application claims priority to and the benefit of Korean Patent Application No. 10-2008-0036899 filed in the Korean Intellectual Property Office on April 21, 2008, the entire contents of which are incorporated herein by reference.

### BACKGROUND OF THE INVENTION

### 1. Field of the Invention

The present invention relates to a wireless video transceiver that can display a rear video of a vehicle to a driver by wirelessly transmitting a corresponding video signal, when the vehicle reverses, and a method thereof. More particularly, the present invention relates to an independent wireless rear/side video transceiver for a vehicle that can charge a battery and supply electricity to each element, using a solar cell independent from the power supply of the vehicle, as a power supply for a rear-sensing camera, without using the power supply from the vehicle itself, sense start and reverse movement of the vehicle with an accelerometer independent from the vehicle, and transmit data acquired from a camera module to a display, using wireless communication, when the vehicle reverses, and a method thereof.

### 2. Description of the Related Art

Various demands for traffic safety have increased with the increase of vehicles, and particularly, requirement for drivers to ensure a field of view of blind spots has been increasing, including the rear of vehicles. A camera and a display have been mounted in the existing vehicles to further ensure the rear view of the vehicles, and a rear-sensing camera and a display have been increasingly mounted from when the vehicles are designed, in order to satisfy the user's demands described above.

It is required to mount a camera and a display to ensure the field of view for the blind spots, including the rear of the vehicles, and a wire transmitting an video signal acquired by the camera to the display, a wire supplying power to the camera, and a wire transmitting a reverse movement signal to the camera and/or the display are required to operate the camera and the display.

In the related art, it is difficult to wire, that is, connect the wires in the existing vehicles, because it is required to disassemble and assemble several parts of the vehicles for a few hours, such that it has a defect that not only a large cost is required, but installation is impossible without expert's help.

Further, connecting the wires complicates the installation of the elements, deteriorates the video quality due to interference with other wires, and damages vehicles during the work. In addition, the available position is limited, such that drivers have difficulty in moving and installing the element at desired positions.

Further, adding wires causes additional manufacturing processes and additional cost, even if the wires for the camera and the display are provided from when vehicles are manufactured.

### SUMMARY OF THE INVENTION

The present invention has been made in an effort to provide an independent wireless rear/side video transceiver that can outputs video information acquired by operating a rear-sensing camera to a display, by supplying power, which is accumulated by a solar cell that is a specific power supply, to a wireless video transmitter including a cameral module, an accelerometer, a wireless transmission unit, and a controller unit which are installed at the rear of a vehicle, determining start and reverse motion of the vehicle with the accelerometer, and transmitting data acquired from the cameral module to the display of a wireless video receiver installed at the front of the vehicle where a driver can see in wireless communication, if necessary, even if wires are not additionally provided, such as a power line for operating the wireless video transmitter, a signal line for sensing the traveling direction of the vehicle, and a data line for transmitting photographing information of a rear-sensing camera to the display at the front, and a method thereof.

Further, the present invention has been made in an effort to provide an independent wireless rear/side video transceiver for a vehicle that can prevent a safety accident by selecting only corresponding video data from a vehicle that can use a plurality of wireless video transmitter, and a method thereof.

Further, the present invention has been made in an effort to provide an independent wireless rear/side video transceiver for a vehicle that outputs a video signal corresponding to a turn direction of a vehicle equipped with a plurality of wireless video transmitters, and a method thereof.

Other features and aspects will be apparent from the following detailed description, the drawings, and the claims.

An exemplary embodiment of the present invention provides an independent wireless video transmitter for a vehicle, which includes: an accelerometer that senses start and reverse movement of a vehicle and outputs the sensed result to a controller unit; a camera module that outputs a video signal acquired by photographing the rear of the vehicle to the controller unit; a solar cell that converts light into electricity; a battery that is charged with the electricity generated from the solar cell; a power management unit that controls the solar cell and the battery; a wireless transmission unit that wirelessly transmits a video signal outputted from the controller unit; and the controller unit that determines and controls input/output signals of the accelerometer, the camera module, the power management unit, and the wireless transmission unit, in which the independent wireless video transmitter is not physically connected to the vehicle, for power and signals.

Another exemplary embodiment of the present invention provides an independent method of wirelessly transmitting video for a vehicle, which includes: sensing reverse movement of a vehicle and an external shock by using an accelerometer, and outputting a sensing signal to a controller unit; supplying power to a camera module and a wireless transmission unit by converting a wireless video transmitter from a power saving mode into an operation mode, and setting a transmission channel of the wireless transmission unit, when the sensing signal is inputted; giving an identification number to a video signal inputted from the camera module; transmitting the video signal with the identification number through the wireless transmission unit; determining whether the vehicle is reversing, on the basis of the signal inputted from the accelerometer; and continuously transmitting video signals, when the vehicle is reversing, and stopping the transmission of video signals and operating in a power saving mode, when the vehicle is moving forward.

Further, the independent method of wirelessly transmitting video for a vehicle further includes determining an external shock and transmitting video signals with shock-sensing signals continuously given with identification number signals regardless of the traveling direction of the vehicle, when a signal corresponding to a strong shock is inputted from the accelerometer, by using the controller of the wireless video transmitter.

Further, the independent method of wirelessly transmitting video for a vehicle further includes determining a signal outputted from the accelerometer independent from the vehicle and outputting a video signal corresponding to a turn direction of the vehicle equipped with a plurality of cameras.

As described above, according to the exemplary embodiments of the present invention, it is possible to improve convenience of installation and reduce installation and repair cost, by supplying power for operating the camera and the display from battery using a solar cell, determining reverse movement of the vehicle with the accelerometer, and transmitting video data in wireless communication to make each element independent from wires in installation.

Further, it is possible to stop a video signal outputted from another vehicle by using an identification number and selectively receiving only corresponding wireless video data in wireless communication.

Further, it is possible to achieve safe driving by using information on a blind spot (that can not be seen) when driving a vehicle by conveniently attaching a plurality of wireless video transmitters, and record the situation after an accident, when the accelerometer senses a strong shock, in dealing with the accident.

### BRIEF DESCRIPTION OF THE DRAWINGS

FIG. 1 is a diagram illustrating a wireless video transmitter having a self-charge function according to an exemplary embodiment of the present invention;
FIG. 2 is a diagram illustrating a wireless video receiver having a self-charge function according to an exemplary embodiment of the present invention;
FIG. 3 is a diagram illustrating the overall operation of the wireless video transmitter and the wireless video receiver according to an exemplary embodiment of the present invention;
FIG. 4 is a flowchart illustrating the operation of a wireless video transmitter having a self-charge function according to an exemplary embodiment of the present invention; and
FIG. 5 is a flowchart illustrating the operation of a wireless video receiver having a self-charge function according to an exemplary embodiment of the present invention.

### DETAILED DESCRIPTION OF THE EMBODIMENT

The configuration and operation of an exemplary embodiment of the present invention is described hereafter in detail with reference to the accompanying drawings. An important feature of the present invention is to provide an independent device from a vehicle in implementing a rear-sensing device of a vehicle, different from mounting a device, which is connected with wires of a vehicle itself, to the rear of the vehicle.

That is, the power supply operating a wireless video transmitter that transmits rear videos and side videos according to an exemplary embodiment of the present invention is implemented by a power supply using a solar cell, independent from the power line for a vehicle. Further, reverse movement of a vehicle is determined by analyzing an output signal from an accelerometer independent from the vehicle. It does not need to install a specific communication wire in the vehicle, because data, including a rear video outputted thereafter from a camera module, is transmitted by wireless communication to a video receiver installed at the front portion of the vehicle that a driver can see. An independent wireless rear/side video transceiver for a vehicle and a method thereof according to an exemplary embodiment of the present invention is described hereafter.

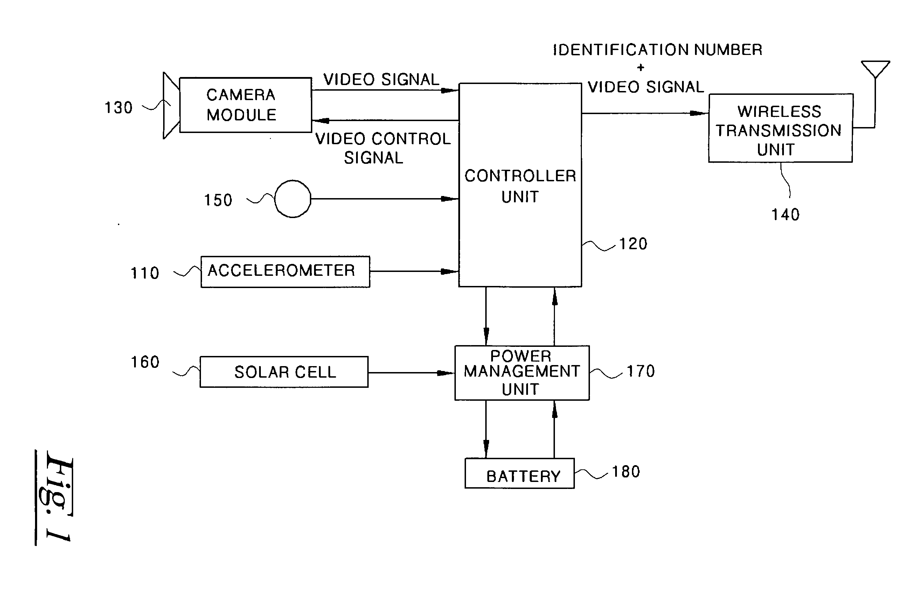

FIG. 1 is a diagram illustrating in detail the configuration of an independent wireless rear/side video transmitter for a vehicle according to an exemplary embodiment of the present invention. Referring to FIG. 1, an accelerometer 110 has a function of sensing start of a vehicle, door open, or a strong external shock and transmitting sensing signals to a controller 120 for a camera, and a function of generating signals indicating the traveling direction of the vehicle that is moving.

The controller unit 120 normally operates the camera in a power saving mode and converts the power saving mode into an operation mode in response to the first signal inputted from the accelerometer 110, supplies a camera module 130 and a wireless transmission unit 140 with power, and controls the camera module 130 to achieve optimum video quality after estimating the surrounding brightness by analyzing a signal from a photosensor 150.

Identification numbers are given by the camera module 130 and the controller unit 120. There is a method that allows identifying video added by using characters and symbols at a predetermined portion on the video image of a camera in an OSD (On Screen Display) type. Further, a camera identification number is combined with a camera video signal and transmitted, by using a predetermined cameral number.

The controller unit 120 adds the identification number to a video signal inputted from the camera module 130 and transmits it through the wireless transmission unit 140. The accelerometer 110 continuously converts movement of the vehicle into electric signals and transmits them to the controller unit 120 and the controller unit 120 continuously transmits video signals, when the vehicle reverses, and stops the transmission of video signals and enter the power saving mode to minimize power consumption, when the vehicle moves forward, on the basis of the electric signals. When receiving a signal corresponding to a large shock from the accelerometer 110, the controller unit 120 determines an external shock and adding a signal indicating a shock to the identification number and transmits it while continuing to transmit video regardless of traveling direction of the vehicle such that a wireless video receiver 200 outputs a shock-sensing signal 250, which functions as a recording start signal, when being connected with a video recorder.

A power management unit 170 has a function of charging a built-in battery 180 with the power generated from a solar cell 160 and a function of supplying the power of the battery 180 to each circuit. Therefore, the wireless video transmitter is independent from the vehicle, because the power of the vehicle itself is not used.

The photosensor 150 converts intensity of light into an electric signal and transmits it to the controller unit 120, the controller 120 analyzes the signal and controls the camera module 130 on the basis of the surrounding brightness to acquire an optimum camera video signal, and also controls a power management unit 170 to charge the battery 180 with power generated from the solar cell 160 or supply the power to each circuit.

Therefore, since the wireless video transmitter of the present invention uses wireless communication for the power supply from the solar cell and the video data transmission, and the accelerometer for generating a start reference signal of the wireless video transmitter and detecting reverse movement, it is completely independent from the vehicle. Accordingly, the wireless video transmitter can be easily installed and does not influence the electric wires in the vehicle, thereby preventing the vehicle from being damage in the installation.

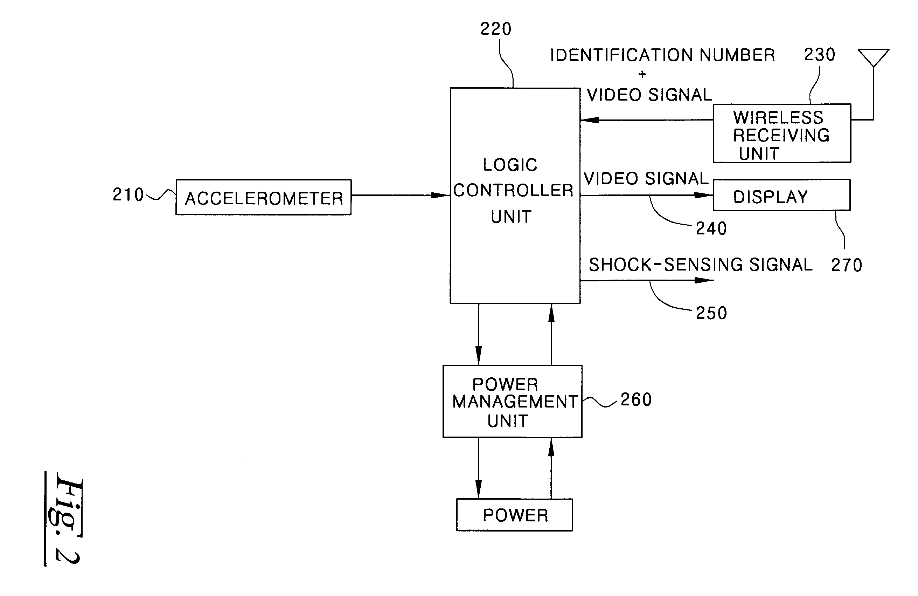

FIG. 2 is a diagram illustrating in detail the configuration of the wireless video receiver 200 according to an exemplary embodiment of the present invention. A controller unit 200 selects video monitoring the rear on the basis of the identification numbers in the video signals transmitted from a wireless receiving unit 230 and transmits the video signal to a display 270. The controller unit 220 has functions of outputting the shock-sensing signal 250, similar to the wireless video transmitter 100, when a signal corresponding to a large shock is inputted from a accelerometer 210, outputting video of the wireless video transmitter 100 having the identification number with a signal indicating the shock, performing sequential conversion between the wireless video transmitters 100 and outputting video for recording, when a shock is detected from the identification numbers of the wireless video transmitters 100, and adding a signal for identifying video of each of the wireless video transmitters 100 and outputting it such that recorded video can be identified when being played.

Further, when a plurality of video transmitters is installed in one vehicle, in FIG. 2, the controller unit 220 analyzes signals from the accelerometer 210 and selects one wireless video transmitter 100, and then transmits corresponding video to the display 270.

Further, the controller unit 220 has a function of automatically outputting a blind point (that cannot be seen) due to the type of vehicle (trailer etc.) to the display, when the vehicle turns, on the basis of the received video signal. For example, when a trailer reverses to the left side, the right side is a blind point for the features of the vehicle; therefore, the right side video is automatically displayed.

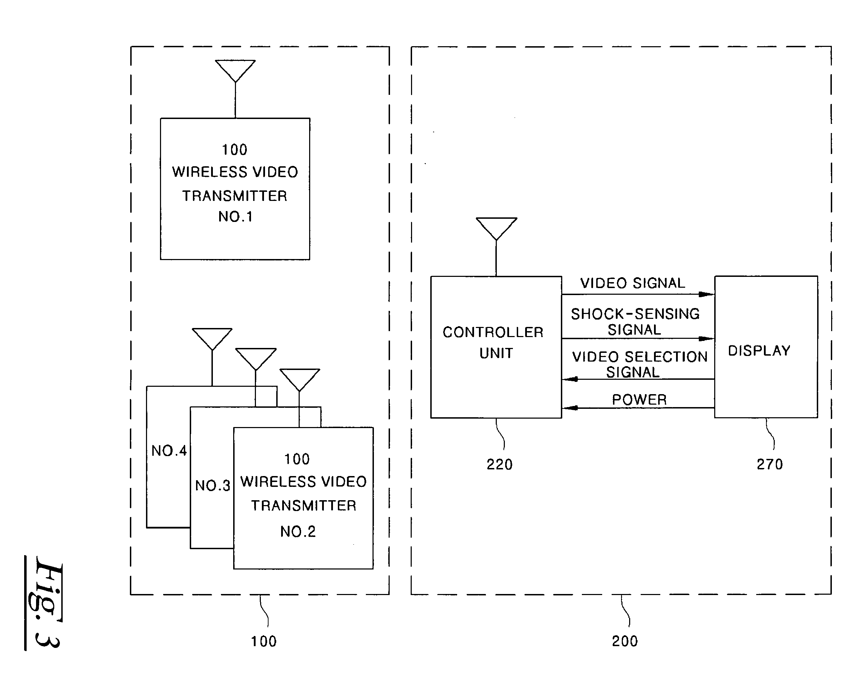

FIG. 3 is a diagram illustrating the overall operation of the wireless video transmitter 100 and the wireless video receiver 200 of the present invention, in which the display 270 is a device having a screen for displaying a video signal, a typical device having an LCD screen or a touch screen, which allows inputting a signal for selecting a desired camera video signal to the controller unit with a user interface or buttons. One or a plurality of wireless video transmitter 100, as described with reference to FIG. 1, sends out a video signal with the identification number, when sensing movement of a vehicle. When the display 270 selects a predetermined wireless video transmitter, the wireless video receiver 200 outputs corresponding video of the wireless video transmitter to the display 270, or outputs video of the rear of the vehicle, when there is no selection.

The wireless video receiver 200 outputs a shock-sensing signal to start shock-recording, if an available recorder is connected, when a shock is sensed by a built-in accelerometer or a signal indicating a shock included in the identification number is transmitted from the wireless video transmitter 100.

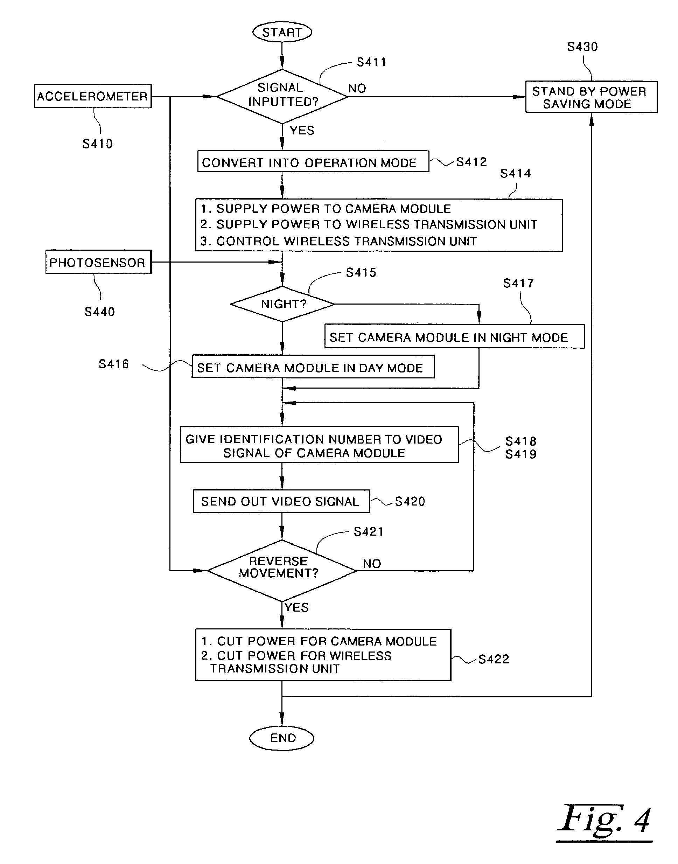

FIG. 4 is a flowchart illustrating the operation of the wireless video transmitter 100 according to an exemplary embodiment of the present invention, in which the controller 120 implements an operation mode (S412), when an acceleration signal is inputted from the accelerometer (S410), and maintains standing by a power saving mode (S430), when there is no input.

The controller unit 120 supplies power to the camera module and the wireless video transmitter and sets a transmission channel for the wireless transmission unit 140, after the operation mode (S412) is implemented (S414). The controller unit 120 controls the camera module to achieve optimum image quality on the basis of the surrounding brightness in response to a signal from the photosensor (S440) (S416, S417). The controller unit 120 adds a receiving module identification number to a video signal (S418) inputted from the camera module 130 (S419) and transmits the video signal through the wireless transmission unit 140. Video continues to be sent out when it is determined that reverse movement continues from the signal inputted from the accelerometer 110, while power consumption is minimized by maintaining the power saving mode, when forward movement continues. The power management unit 170 is controlled by a signal inputted from the photosensor 150 to charge the battery 180 with power generated from the solar cell 160, if chargeable.

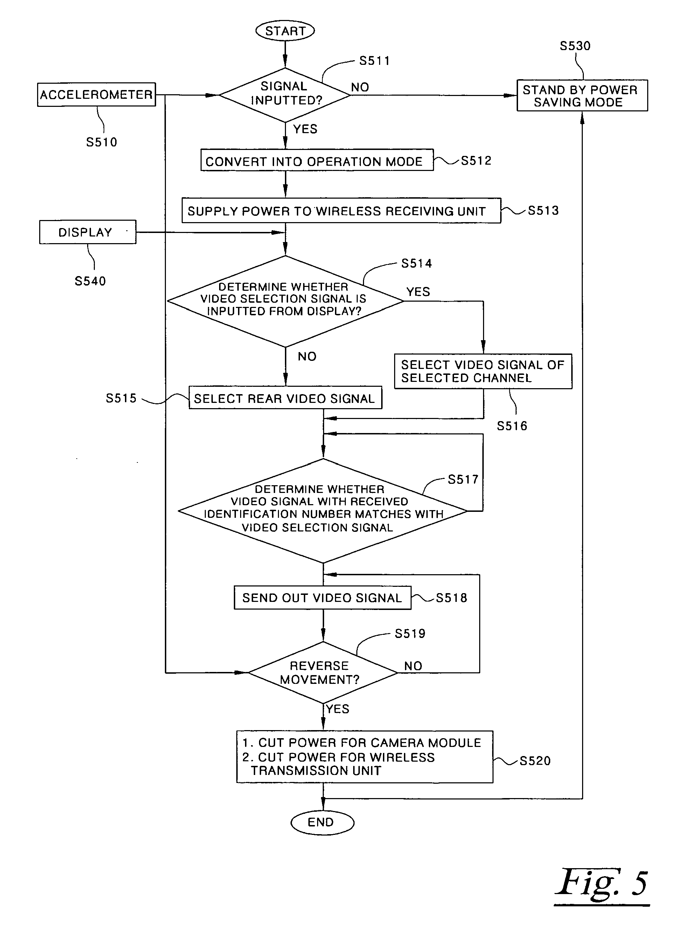

FIG. 5 is a flowchart illustrating the operation of the wireless video receiver 200 according to an exemplary embodiment of the present invention, in which the controller unit 220 determines whether an acceleration signal is inputted from the accelerometer (S510) (S511), and then keeps standing by the power saving mode (S530), when there is no input, and implement the operation mode (S512), where there is an input signal. The controller unit 220 supplies power to the wireless video receiver 200 after the operation mode (S512) is implemented (5513). The controller unit 220 determines whether a video selection signal was inputted from the display 270 (S514), when a video selection signal of the wireless video transmitter 100 is outputted (S540), and then selects a video signal of the rear camera when there is no input (S515), and selects a video signal of the selected channel when there is an input (5516). A channel of the wireless receiving unit 230 is selected to receive a desired video signal by determining whether the video signal including the received identification number matches with the video selection signal (5517).

The wireless receiving unit 230 has a function of preventing the wrong camera video from being displayed by ascertaining the identification number that was set in the set channel. A video signal is outputted to the display 270, when the video signal including the identification number matches with the video selection signal (S518).

A video signal is outputted to the display 270, when an identification number extracted from a video signal inputted from the wireless receiving unit 230 corresponds to the selected wireless video transmitter 100. When a shock signal is inputted in the identification number, a recording time is sent by outputting a shock-sensing signal and the mounted transmitting module performs outputting sequentially at a predetermined interval (e.g. 1 second) such that all of the wireless video transmitter 100 can record. In this case, signs (characters, symbols, and marks etc.) for video identification are added to the output video such that the recorded video that is played can be identified, in order to discriminate video. The controller unit 220 repeats sending the video when determining that reverse movement continues from the signal inputted form the accelerometer 210 (S519), while it minimizes power consumption by implementing the power saving mode, when forward movement continues (S520).

As described above, since the present invention is configured independently from a vehicle, it can be sold as an independent product and more easily installed, thereby reducing installation and repair cost.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An independent wireless video transmitter for a vehicle, comprising:
an accelerometer that senses start and reverse movement of a vehicle and outputs the sensed result to a controller unit;
a camera module that outputs a video signal acquired by photographing the rear of the vehicle to the controller unit;
a solar cell that converts light into electricity;
a battery that is charged with electricity generated from the solar cell;
a power management unit that controls the solar cell and the battery;
a wireless transmission unit that wirelessly transmits a video signal outputted from the controller unit; and
the controller unit that determines and controls input/output signals of the accelerometer, the camera module, the power management unit, and the wireless transmission unit,
wherein the independent wireless video transmitter is not physically connected to the vehicle, for power and signals.

2. The independent wireless video transmitter for a vehicle according to claim 1, further comprising a photosensor that senses illumination around the photographed area and outputs the illumination to the controller unit.

3. The independent wireless video transmitter for a vehicle according to claim 1, wherein the controller unit of the wireless video transmitter gives an identification number to a video signal outputted from the camera module.

4. An independent wireless video transceiver for a vehicle, comprising:
the independent wireless video transmitter for a vehicle according to any one of claims 1 to 3; and
a wireless video receiver including: a wireless receiving unit that receives a video signal transmitted from the wireless transmission unit of the independent wireless video transmitter for a vehicle; a display that outputs a signal received by the wireless receiving unit; and a controller for the wireless video receiver which controls the wireless receiving unit and a display to display the received video signals.

5. An independent method of wirelessly transmitting video for a vehicle, comprising:
sensing reverse movement of a vehicle and an external shock by using an accelerometer, and outputting a sensing signal to a controller unit;
supplying power to a camera module and a wireless transmission unit by converting a wireless video transmitter from a power saving mode into an operation mode, and setting a transmission channel of the wireless transmission unit, when the sensing signal is inputted;
giving an identification number to a video signal inputted from the camera module;
transmitting the video signal with the identification number through the wireless transmission unit;
determining whether the vehicle is reversing, on the basis of the signal inputted from the accelerometer; and
continuously transmitting video signals, when the vehicle is reversing, and stopping the transmission of video signals and operating in a power saving mode, when the vehicle is moving forward.

6. The independent method of wirelessly transmitting video for a vehicle according to claim 5, further comprising determining an external shock and transmitting video signals with shock-sensing signals continuously allocated with identification number signals regardless of the traveling direction of the vehicle, when a signal corresponding to a strong shock is inputted from the accelerometer.

7. The independent method of wirelessly transmitting video for a vehicle according to claim 5, further comprising setting the camera module in a day or night mode by analyzing an illumination signal of a photosensor.

8. The independent method of wirelessly transmitting video for a vehicle according to claim 5, further comprising determining a signal outputted from the accelerometer and transmitting a video signal corresponding to a turn direction of the vehicle equipped with a plurality of cameras.
